# EUROPEAN PATENT APPLICATION

(11) **EP 4 620 818 A1**
(43) Date of publication of application: **24.09.2025**
(21) Application number: 24275027.1
(22) Date of filing: 19.03.2024
(51) Int. Cl.: B64D 13/06

(54) **SUPPLYING A FLOW OF COMPRESSED AIR**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system for supplying a flow of compressed air comprises an air cycle system (ACS) arranged to output a flow of cooled air, and an airflow recirculation path configured to direct the cooled air from the ACS to one or more locations requiring cooling. The ACS comprises an air compression stage, a heat exchange stage and an air expansion stage. The airflow recirculation path is also configured to direct the cooled air from said one or more locations to an inlet of the air compression stage of the ACS. The system further comprises an air outlet controllable to divert at least a portion of said compressed air away from the airflow recirculation path, thereby providing a supply of compressed air, and comprises an air inlet controllable to introduce air into the airflow recirculation path.

## Description

### FIELD

The present invention relates to systems and methods for supplying a flow of compressed air, for example in aircraft or other vehicles.

### BACKGROUND

Vehicles, such as aircraft, often include sub-systems that require a supply of compressed air. For example, an aircraft may comprise a life-support system that requires pressurised air such that it can generate oxygen, which is then supplied to the pilot (and/or passengers) via oxygen masks. Other examples of functions that require compressed air include, but are not limited to, de-misting systems and fuel tank pressurisation systems. However, the need to provide an air compression system to generate the supply of compressed air can have a detrimental impact on the size, weight and complexity of the vehicle. In some aircraft, gas turbine bleed air is used as a supply of pressurised air. However, this can reduce the efficiency of the gas turbine engine. Also, since the bleed air is typically at a much higher pressure than is needed for other functions onboard the aircraft, the pressure must be reduced prior to supplying the pressurised air to e.g. a life-support system. Additional energy is therefore wasted (i.e. lost from the system) in the process of reducing the pressure. It would therefore be desirable to provide an improved solution for supplying a flow of compressed air.

### SUMMARY

According to a first aspect of the present invention, there is provided a system comprising: an air cycle system, ACS, comprising an air compression stage arranged to receive and compress a flow of air so as to produce a flow of compressed air, a heat exchange stage arranged to cool said compressed air, and an air expansion stage arranged to expand air received from the heat exchange stage so as to output a flow of cooled air; an airflow recirculation path configured to direct the cooled air from the ACS to one or more locations requiring cooling, and from said one or more locations to an inlet of the air compression stage; an air outlet controllable to divert at least a portion of said compressed air away from the airflow recirculation path, thereby providing a supply of compressed air; and an air inlet controllable to introduce air into the airflow recirculation path.

In some embodiments according to the first aspect, the system comprises an outlet heat exchanger configured to cool said portion of compressed air diverted by the air outlet.

In some embodiments according to the first aspect, the outlet heat exchanger is configured to exchange heat between said portion of compressed air and the flow of cooled air.

In some embodiments according to the first aspect, the system comprises a first pressure reduction valve for controlling a pressure of the supply of compressed air, the first pressure reduction valve being arranged to receive said portion of compressed air diverted by the air outlet.

In some embodiments according to the first aspect, the system comprises an inlet heat exchanger in fluid communication with the air inlet, the inlet heat exchanger being configured to reduce a temperature of the air introduced into the airflow recirculation path by the air inlet.

In some embodiments according to the first aspect, the system comprises a second pressure reduction valve for controlling a pressure at which said air is introduced into the airflow recirculation stream by the air inlet.

In some embodiments according to the first aspect, the ACS comprises one or more rotating components, the system comprising a drive mechanism configured to drive said one or more rotating components.

In some embodiments according to the first aspect, the system comprises a plurality of said rotating components, wherein the drive mechanism comprises a common drive shaft connected to two or more of said plurality of rotating components, such that said two or more rotating components are configured to be driven via rotation of the common drive shaft.

In some embodiments according to the first aspect, the plurality of rotating components comprise: one or more compressors, said one or more compressors forming at least part of the air compression stage; and/or one or more turbines, said one or more turbines forming at least part of the air expansion stage.

In some embodiments according to the first aspect, the drive mechanism comprises an electric motor.

In some embodiments according to the first aspect, the air compression stage of the ACS comprises a plurality of compressors connected in series, such that an outlet of one of the plurality of compressors is connected to an inlet of another one of the plurality of compressors.

In some embodiments according to the first aspect, the heat exchange stage of the ACS comprises an intercooler heat exchanger connected between the outlet of said one of the plurality of compressors and the inlet of said other one of the plurality of compressors.

In some embodiments according to the first aspect, the heat exchange stage of the ACS comprises an aftercooler heat exchanger connected between an outlet of the air compression stage and an inlet of the air expansion stage.

In some embodiments according to the first aspect, the system comprises a liquid coolant distribution system configured to receive a supply of liquid coolant and distribute said liquid coolant to one or more heat exchangers within the system as a cooling medium.

In some embodiments according to the first aspect, the system comprises a pressure control mechanism for controlling a pressure of said portion of compressed air that is diverted away from the airflow recirculation path by the air outlet.

In some embodiments according to the first aspect, the air expansion stage of the ACS comprises a variable geometry turbine, and the pressure control mechanism comprises a mechanism for adjusting an orientation of one or more guide vanes within the variable geometry turbine.

According to a second aspect of the present invention, there is provided a vehicle comprising the system according to the first aspect.

In some embodiments according to the second aspect, the vehicle is an aircraft.

In some embodiments according to the second aspect, said one or more locations, to which the airflow recirculation path is configured to direct the cooled air, comprise one or more of: one or more spaces configured for human occupancy, said one or more spaces comprising a cockpit and/or a passenger compartment; and/or an avionics compartment housing one or more avionics components.

In some embodiments according to the second aspect, the air inlet is configured to receive air from one or more of the following sources for introduction into the airflow recirculation pathway: bleed air from one or more engines of said vehicle; one or more compressors; and one or more ejectors.

In some embodiments according to the second aspect, said one or more ejectors are configured to be driven by the supply of compressed air from the air outlet.

According to a third aspect of the present invention, there is provided a method of supplying a flow of compressed air from an air cycle system, ACS, comprising an air compression stage arranged to produce a flow of compressed air, a heat exchange stage arranged to cool said compressed air, and an air expansion stage arranged to expand air received from the heat exchange stage, the method comprising: controlling the air compression stage of the ACS to receive and compress the flow of air so as to produce the flow of compressed air; controlling an air outlet to divert at least a portion of said compressed air away from an airflow recirculation path, thereby providing a supply of compressed air, wherein said airflow recirculation path is configured to direct the cooled air from the ACS to one or more locations requiring cooling and from said one or more locations to an inlet of the air compression stage; controlling the air expansion stage of the ACS to expand air received from the heat exchange stage so as to output the flow of cooled air to said one or more locations via the airflow recirculation path; and controlling an air inlet to introduce air into the airflow recirculation path.

According to a fourth aspect of the present invention, there is provided a computer program comprising instructions which, when executed by one or more processors, cause said one or more processors to carry out a method according to the third aspect.

According to a fifth aspect of the present invention, there is provided a non-transitory computer-readable storage medium having stored thereon a computer program according to the fourth aspect.

According to a sixth aspect of the present invention, there is provided a controller configured to control the system according to the first aspect, the controller comprising: the non-transitory computer-readable storage medium according to the fifth aspect; and one or more processors arranged to execute the computer program stored on said non-transitory computer-readable storage medium.

### BRIEF DESCRIPTION OF THE FIGURES

Embodiments of the invention will now be described by way of example only with reference to the figures, in which:
Figure 1 schematically illustrates a system for supplying a flow of compressed air;
Figure 2 schematically illustrates a system for supplying a flow of compressed air, comprising an air cycle system having a plurality of compressors;
Figure 3 schematically illustrates a system for supplying a flow of compressed air, comprising an air cycle system having a plurality of compressors and a turbine capable of being driven independently of one another;
Figure 4 is a flowchart showing a method of supplying a flow of compressed air; and
Figure 5 shows a controller for controlling a system for supplying a flow of compressed air.

### DETAILED DESCRIPTION

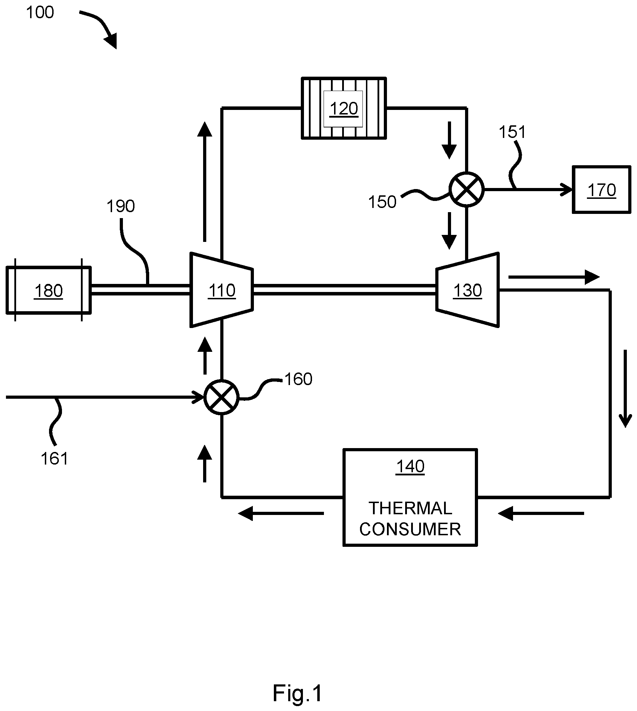

Referring now to Fig. 1, a system for supplying a flow of compressed air is schematically illustrated, according to an embodiment of the present invention. The system 100 may, for example, be implemented in a vehicle. In the present embodiment the system 100 is included in an aircraft. In other embodiments, a system 100 such as the one shown in Fig. 1 may be implemented in vehicles other than aircraft, for example in a road vehicle, train, ship or submarine. In yet other embodiments, a system 100 such as the one shown in Fig. 1 may be used in applications other than vehicles, for example in structures such as residential homes, offices, factories, warehouses and so on.

The system 100 comprises an air cycle system (ACS), the ACS comprising an air compression stage 110, a heat exchange stage 120 and an air expansion stage 130. An ACS typically includes a number of rotating components, such as one or more compressors 110, turbines 130, shafts 190 and/or motors 180, which are collectively referred to as an air cycle machine, ACM. The ACS comprises the ACM (i.e. the rotating components), plus one or more components for removing heat from the system (i.e. the heat exchange stage 120). The ACS is configured to implement a thermodynamic refrigeration cycle, also referred to as a reverse Brayton cycle, whereby a fluid (in this case, air) is compressed, raising both its pressure and temperature. Thermal energy is then removed from the compressed air to lower its temperature, followed by expanding the compressed air to lower its temperature still further (in particular, to a temperature that is below the temperature of the air at the start of the cycle, resulting in a net cooling effect).

The system 100 further comprises an airflow recirculation path configured to direct the cooled air from the ACS to one or more locations 140 requiring cooling, and from said one or more locations to an inlet of the air compression stage 110. Each location 140 that requires cooling may be referred to as a "thermal consumer". In the present embodiment, a single thermal consumer 140 is illustrated, but in other embodiments the airflow recirculation path may be configured to direct the cooled air to any number of locations/thermal consumers 140. In embodiments in which the cooled air is directed to a plurality of thermal consumers, the thermal consumers may be arranged in parallel or in series along the airflow recirculating path. In embodiments with three or more thermal consumers, the thermal consumers may be arranged wholly in parallel, wholly in series, or in a combination of parallel and series. For example, two thermal consumers may be arranged in parallel, with a third thermal consumer arranged in series either upstream of downstream of the two thermal consumers that are arranged in parallel. The arrows in Fig. 1 illustrate the direction of flow around the airflow recirculation path and through the ACS. In Fig. 1, the airflow recirculation path runs from the output of the air expansion stage 130 to an input of the air compression stage 110.

Together, the ACS and the airflow recirculation path form a closed loop, meaning that cooled air that is delivered to the one or more thermal consumers 140 is subsequently returned to the inlet of the ACS (i.e. the inlet of compressor 110 in the present embodiment). In practice, the air that is returned to the inlet of the ACS may still be relatively cool compared to an ambient air temperature, and as a result the ACS has to do less work (i.e. consume less energy) to cool the air back to the desired temperature.

The air compression stage 110 of the ACS is arranged to receive and compress a flow of air so as to produce a flow of compressed air. For example, the air compression stage 110 may comprise one or more compressors. In the present embodiment the air compression stage comprises a single compressor 110, but in other embodiments the air compression stage may comprise any number of compressors. For avoidance of doubt, the term "compressor" in this context should be understood as encompassing both rotating and non-rotating (e.g. reciprocating) compressors.

The heat exchange stage 120 of the ACS is arranged to cool the compressed air (i.e. air that has been compressed by the air compression stage 110). In the present embodiment, the heat exchange stage 120 comprises a heat exchanger 120 connected between an outlet of the air compression stage 110 and an inlet of the air expansion stage 130. Since the heat exchanger 120 is located downstream of the air compression stage 110 (i.e. downstream relative to the direction of airflow within the ACS and the airflow recirculation pathway), air flows through the heat exchanger 120 after having been compressed by the air compression stage 110. Accordingly, the heat exchanger 120 may be referred to as an "aftercooler heat exchanger", or simply as an "aftercooler". The aftercooler 120 is configured to extract heat from the compressed air, for example by conducting heat from the compressed air to a cooling medium that is at a lower temperature than the compressed air. Depending on the embodiment, the aftercooler 120 may be configured to receive a cooling medium in either the gas or liquid phase. In some embodiments the cooling medium may change phase from a liquid to a gas as it passes through the aftercooler 120.

The air expansion stage 130 is arranged to expand air that is received from the heat exchange stage 120 (e.g. from aftercooler 120) so as to output a flow of cooled air. Here, the term "cooled air" is used to refer to the flow of air that is outputted from the air expansion stage 130 at a temperature that is lower than a temperature at which the air is initially received by the air compression stage 110 of the ACS. In the present embodiment, the air expansion stage 130 comprises a turbine 130, although in other embodiments other means of expanding the compressed air may be provided. In some embodiments, the air expansion stage 130 may comprise a plurality of turbines. In some embodiments, the air expansion stage 130 may comprise one or more components other than turbines for expanding the compressed air. For example, in some embodiments the air expansion stage 130 may comprise a reciprocating (e.g. piston-based) mechanism for expanding the compressed air, in which case the temperature of the air may be lowered as a result of the work done by the compressed air in causing the piston(s), leading to energy being extracted from the compressed air.

In addition to the ACS and the airflow recirculation path, the system 100 comprises an air outlet 150 and an air inlet 160. The air inlet 160 and air outlet 150 are both disposed in fluid communication with the airflow recirculation path, and can be controlled to selectively allow a certain amount of air to enter or exit the airflow recirculation path, respectively. The air outlet 150 is controllable to divert at least a portion of said compressed air away from the airflow recirculation path, thereby providing a supply of compressed air 151. This may be achieved by arranging the air outlet 150 in fluid communication with a point along the airflow recirculation path upstream of the air expansion stage 130.

By providing an air outlet 150 that can be controlled to divert at least a portion of compressed air away from the airflow recirculation path, embodiments of the present invention thereby provide a system 100 in which a single apparatus (the ACS) can perform the dual functions of supplying a stream of compressed air 151 and also supplying a flow of cooled air. The stream of compressed air 151 can be supplied to any number of other systems 170 that require a supply of compressed air, without requiring the use of separate apparatus to generate a supply of compressed air in addition to the flow of cooled air generated by an ACS. The system(s) that require a supply of compressed air may be referred to as "pressurised air consumer(s)".

For instance, in embodiments where a system similar to the one shown in Fig. 1 is implemented in an aircraft, the aircraft may include a number of other systems 170 that require a supply of compressed air. Examples of systems 170 on an aircraft that may require a supply of compressed air include, but are not limited to, a life support system (e.g. to supply air to a pilot's oxygen mask), a windscreen demisting system, and a fuel tank pressurisation system.

This approach can provide a high-pressure, low-flow supply of compressed air which would otherwise be difficult to generate via standalone means (i.e. compared to the alternative of using a separate apparatus to the ACS to generate the supply of compressed air). For example, in a typical implementation onboard an aircraft, a flow rate around the airflow recirculation path may be in the region of around 0.5 kilograms per second (kg/s). In such implementations, the air outlet 150 may be controlled to divert in the region of around 10-20% of the nominal flow away from the airflow recirculation path, producing a supply of compressed air with a flow rate of around 50 g/s in this example, which can be sufficient to meet the high-pressure, low-flow requirements of e.g. a life support system.

In some embodiments, the system 100 may comprise a mechanism for controlling the pressure of the compressed air supply 151 that is provided by the air outlet 150. In the present embodiment, the turbine 130 in the air expansion stage of the ACS is a variable geometry turbine 130, in which the geometry of the guide vanes within the turbine 130 can be dynamically adjusted. By adjusting the geometry of the guide vanes (e.g. an angle of the guide vanes relative to the direction of airflow through the turbine 130), the resistance to flow of the turbine 130 can be adjusted, in turn raising or lowering the back-pressure of the compressed airflow upstream of the inlet to the turbine 130. For example, by adjusting the angle of inlet guide vanes within the turbine 130 so that they are at a shallower angle to the direction of air flowing into the turbine, the inlet guide vanes present less resistance to the incoming airflow, and hence the pressure upstream of the turbine 130 is reduced.

It should be appreciated that a variable geometry turbine is one example of a mechanism by which the pressure of the compressed air supply 151 may be controlled, but that other suitable mechanisms may be provided in other embodiments. For example, in some embodiments the pressure may be controlled solely by means of a suitable valve (e.g. a pressure reducing and shut-off valve, PRSOV, in fluid communication with the air outlet 150).

The air inlet 160 is controllable to introduce air into the airflow recirculation path. For example, the air inlet 160 may be controlled to compensate for a reduction in pressure and/or flow rate along the airflow recirculation path that is caused, or that would otherwise result, by said portion of the compressed air being diverted away from the airflow recirculation path. In other words, the air inlet 160 can be controlled to replace the portion of air that is diverted away from the airflow recirculation path by the air outlet 150. The air inlet 160 can therefore be used to maintain a desired pressure within the closed loop, i.e. within the ACS and the airflow recirculation path. The air inlet 160 may also be controlled to achieve other results, for example to replace any leakage of air that may occur within the closed loop (e.g. leakage via one or more of the thermal consumers 140, for example leakage via a cockpit through which the airflow recirculation path passes), and/or to maintain a desired composition of air within the closed loop (e.g. to keep carbon dioxide, CO₂, levels below a certain threshold required for human occupancy).

In the present embodiment the air inlet 160 is arranged to introduce air into the airflow recirculation path at a point downstream of the thermal consumer(s) 140 and upstream of the air compression stage 110 of the ACS. This arrangement may be simpler than e.g. an alternative approach of introducing air into the high-pressure flow within the ACS, which could reduce a pressure of the compressed airflow within the ACS and hence reduce the efficiency of the ACS. Also, this arrangement may be advantageous compared to an alternative approach of introducing air at another point along the low-pressure part of the closed loop, for example at a point between the air expansion stage 130 and the thermal consumer(s) 140, since doing so could alter the temperature of the cooled air (i.e. if the air being introduced through the air inlet 160 is at a different temperature to the cooled air exiting the air expansion stage 130). Nevertheless, in some embodiments the air inlet 160 may be arranged to introduce air at a different point around the closed loop to the one shown in Fig. 1.

Depending on the embodiment, the air inlet 160 may be configured to receive a stream of inlet air 161 from any number of sources. For example, when the system 100 is implemented in an aircraft, the air inlet 160 may be configured to receive air from one or more of the following sources for introduction into the airflow recirculation pathway: bleed air from one or more engines of the vehicle (e.g. gas turbine engines); one or more compressors (e.g. an electrically-driven ambient compressor); and one or more ejectors. In embodiments in which the air inlet 160 is configured to receive the stream of inlet air 161 from an ejector, the ejector may be configured to be driven by the supply of compressed air 151 from the air outlet 150. This arrangement can provide a suitable mechanism for drawing replacement air into the closed loop at a sufficiently high rate, without any significant increase in complexity or the number of components that are required in the system 100.

Continuing with reference to Fig. 1, in the present embodiment the ACS comprises a plurality of rotating components in the form of a compressor 110 and a turbine 130. In some embodiments the ACS may only comprise a single rotating component, for example, a single compressor (e.g. if the turbine is omitted and replaced with a non-rotating air expansion component, such as an air expansion chamber). When the ACS comprises one or more rotating components, the system 100 may comprise a drive mechanism configured to drive said one or more rotating components.

In the present embodiment, the system 100 comprises a drive mechanism in the form of an electric motor 180 coupled to a drive shaft 190. Both the compressor 110 and the turbine 130 are configured to be driven via rotation of the drive shaft 190, and hence the drive shaft 190 may be referred to as a "common" drive shaft 190 (i.e. in the sense that the same drive shaft 190 is common to both the compressor 110 and the turbine 130).

By using a common drive shaft to drive two or more rotating components of the ACS, the drive mechanism can be simplified and the number of components reduced. However, in some embodiments a plurality of drive mechanisms may be provided, and/or a single source of rotary motion such as an electric motor 180 or a pneumatically-driven turbine (e.g. driven by high-pressure air, such as engine bleed air or ram air in an aircraft) may be configured to drive a plurality of drive shafts.

A certain amount of energy is recovered by the one or more turbines 130 during expansion of the compressed air, helping to drive rotation of the common drive shaft 190 and in turn helping to drive the one or more compressors 110, reducing a load on the electric motor 180.

In embodiments in which the ACS comprises a plurality of rotating components, as in Fig. 1, a common drive shaft may be configured to drive two or more of the rotating components, but does not necessarily need to drive all of the rotating components (e.g. in embodiments comprising three or more rotating components) to be considered a common drive shaft. Furthermore, it should be understood that depending on the embodiment, the drive shaft 190 may be a rigid shaft or may be flexible (e.g. comprising a plurality of rigid sections connected by one or more flexible couplings).

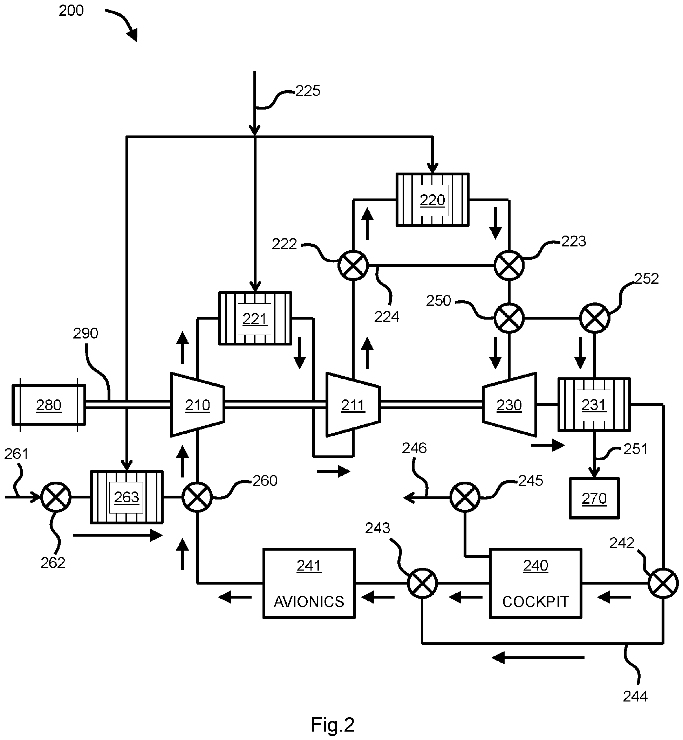

Referring now to Fig. 2, a system comprising an air cycle system having a plurality of compressors is schematically illustrated, according to an embodiment of the present invention. Like the system 100 of Fig. 1, the system 200 of Fig. 2 comprises an ACS comprising: an air compression stage 210, 211, a heat exchange stage 220, 221, and an air expansion stage 230; an airflow recirculation path; one or more thermal consumers 240, 241; a driving mechanism comprising an electric motor 280 and a common drive shaft 290; an air outlet 250 configured to provide a supply of compressed air 251 to one or more pressurised air consumers 270, and an air inlet 260 configured to receive a stream of inlet air 261. For the sake of brevity, similar aspects that are common to both systems 100, 200 will not be repeated here. The system 200 of Fig. 2 differs from the system 100 of Fig. 1 in a number of aspects, which are described in more detail below.

The system 200 of Fig. 2 differs from the system 100 of Fig. 1 in that the system 200 of the present embodiment comprises an outlet heat exchanger 231, which is configured to cool the portion of compressed air that is diverted by the air outlet 260. In the present embodiment the outlet heat exchanger 231 is configured to exchange heat between said portion of compressed air and the flow of cooled air from the air expansion stage 230, such that in use, the flow of cooled air in effect acts as a cooling medium to reduce a temperature of said portion of compressed air 251. This approach provides a simple and efficient mechanism for lowering a temperature of the supply of compressed air 251, without the need for a separate supply of cooling medium to the outlet heat exchanger 231. Nevertheless, in some embodiments the outlet heat exchanger 231 may be configured to use a different cooling medium to cool the supply of compressed air 251, instead of using the flow of cooled air provided by the air expansion stage 230. In some embodiments the outlet heat exchanger 231 may be omitted (e.g. as in Fig. 1), for instance if the pressurised air consumer(s) 270 do not have a specific temperature requirement, or if the supply of compressed air 251 is already at a suitable temperature for the pressurised air consumer(s) 270.

The system 200 of Fig. 2 further differs from that of Fig. 1 in that the system 200 of the present embodiment comprises a first pressure reduction valve 252 and a second pressure reduction valve 262. In some embodiments, one or both of the first and second pressure reduction valves 252, 262 may be omitted, as is the case in Fig. 1. The first pressure reduction valve 252 is configured to control a pressure of the supply of compressed air 251, and is arranged to receive said portion of compressed air 251 that has been diverted by the air outlet 250. In some embodiments the first pressure reduction valve 252 may also be capable of shutting off the flow of compressed air completely, in which case it may be referred to as a pressure-reducing and shut-off valve (PRSOV). In some embodiments, one of the air outlet 250 and the first pressure reduction valve 252 may be omitted. For example, a single component may perform the functions of both the air outlet 250 and the first pressure reduction valve 252 (i.e. flow control and pressure control).

The second pressure reduction valve 262 is configured to control a pressure at which the inlet air 261 is introduced into the airflow recirculation stream by the air inlet 260. In some embodiments the second pressure reduction valve 262 may also be capable of shutting off the flow of compressed air completely (in other words, the second pressure reduction valve 262 may be a PRSOV). In some embodiments, one of the air inlet 260 and the second pressure reduction valve 262 may be omitted. For example, a single component may perform the functions of both the air inlet 260 and the second pressure reduction valve 262 (i.e. flow control and pressure control).

A further difference between the systems 100, 200 of Figs. 1 and 2 is that the system 200 of the present embodiment comprises an inlet heat exchanger 263. The inlet heat exchanger 263 is in fluid communication with the air inlet 260, and is configured to reduce a temperature of the inlet air 261 before it is introduced into the airflow recirculation path by the air inlet 260. In this way, the system 200 can reduce (or even avoid entirely) an increase in the temperature of the air within the closed loop as a result of the introduction of fresh air via the air inlet 260. Otherwise, if air was introduced at a higher temperature than the air already present in the closed loop, the load on the ACS would be increased due to the higher cooling requirement. In some embodiments, a similar effect may be achieved by providing the inlet heat exchanger 263 at a different location, for example at a point along the airflow recirculation pathway downstream of the air inlet 260 and upstream of the first compressor 210. Furthermore, in some embodiments the inlet heat exchanger 263 may be omitted entirely, for example if the inlet air 261 is expected to already be at a similar temperature to the air that is returned to the first compressor 210 by the airflow recirculation path, in which case any additional load on the ACS caused by the introduction of fresh air via the air inlet 260 may be negligible.

Yet another difference between the system 200 of Fig. 2 and that of Fig. 1 is that in the present embodiment, the air compression stage of the ACS comprises a plurality of compressors 210, 211 connected in series. In other words, an outlet of a first one 210 of the plurality of compressors is connected to an inlet of a second one 211 of the plurality of compressors, as shown by the arrows indicating the direction of airflow in Fig. 2. By connecting a plurality of compressors 210, 211 in series in this way, a higher compression ratio can be achieved across the air compression stage as a whole.

In embodiments in which one or both of the first and second compressors 210, 211 are configured such that the drive shaft for each compressor (e.g. a common drive shaft 290) extends on either side of the compressor, physical constraints may prevent air from being introduced axially to the compressor 210, 211. In such embodiments, the compressor(s) 210, 211 may comprise radial inlet form compressors, in which air is introduced to the compressor in the radial direction. In other embodiments, one or both of the first and second compressors 210, 211 may be configured differently, e.g. to be driven by a drive shaft extending out of just one side of the compressor, in which case an axial compressor may be used.

The system 200 of Fig. 2 also differs from the system 100 of Fig. 1 in that the heat exchange stage of the ACS comprises a first heat exchanger 221 and a second heat exchanger 220. The first heat exchanger 221 is connected between the outlet of the first compressor 210 and the inlet of the second compressor 211. The first heat exchanger 221 is configured to reduce a temperature of the compressed air that exits the first compressor 210 prior to the air reaching the second compressor 211. Since the first heat exchanger 221 is connected between the first and second compressors 210, 211, the first heat exchanger 221 may be referred to as an "intercooler heat exchanger", or simply as an "intercooler".

The second heat exchanger 220 is connected between an outlet of the air compression stage (i.e. an outlet of the second compressor 211) and an inlet of the air expansion stage 230. The second heat exchanger 220 can therefore be referred to as an aftercooler, similar to the heat exchanger 120 described above with reference to Fig. 1. In the present embodiment, the system 200 further comprises first and second bypass valves 222, 223 connected to a bypass line 224. One end of the bypass line 224 is in fluid communication with a point along the compressed air flow path upstream of the aftercooler 220, whilst another end of the bypass line 224 is in fluid communication with a point along the flow path downstream of the aftercooler 220. In this way, the first and/or second bypass valves 222, 223 can be controlled to allow some, all or none of the flow of compressed air to flow along the bypass line 224 and thereby bypass the aftercooler 220. In this way, the extent to which the compressed air is cooled by the aftercooler 220 can be dynamically adjusted by controlling the first and/or second bypass valves 222, 223. In some embodiments, one of the first and second bypass valves 222, 223 may be omitted, or both bypass valves 222, 223 and the bypass line 224 may be omitted entirely (e.g. if dynamic control of the temperature of the compressed air upstream of the air expansion stage 230 is not required). In embodiments in which one of the first and second bypass valves 222, 223 is omitted, the remaining bypass valve 222, 223 (i.e. a single valve) may be disposed at any point along the bypass line 224 (e.g. midway along the bypass line 224), rather than being disposed at one end of the bypass line 224. In some embodiments, a similar arrangement of bypass valve(s) and a bypass line may be provided for the intercooler 221, to allow dynamic control over the extent of cooling provided by the intercooler 221.

The system 200 of Fig. 2 therefore comprises a plurality of heat exchangers: the intercooler 221, aftercooler 220, outlet heat exchanger 231 and inlet heat exchanger 263. In some embodiments, one or more heat exchangers within the system 200 may be configured to receive a liquid coolant as a cooling medium. In the present embodiment, the system 200 comprises a coolant distribution system 225 configured to receive a supply of liquid coolant and distribute said coolant to the intercooler 221, aftercooler 220 and inlet heat exchanger 263. In contrast, conventional aircraft typically use ram air to cool the heat exchanger(s) in an ACS.

There can be several benefits to using liquid cooling rather than air cooling in some or all of the heat exchangers. Firstly, liquid cooling is generally more efficient than air cooling, increasing the overall cooling capacity of the system 200. Secondly, by using liquid rather than ram air as the cooling medium when the system 200 is implemented in an aircraft, the number of exhaust streams from the aircraft can be commensurately reduced, compared to an equivalent system in which the same heat exchanger(s) is/are cooled using ram air. For example, the liquid coolant that exits the heat exchanger(s) can be combined into a single stream from which energy can be extracted at a single location, reducing the number of exhaust streams. This in turn can help to manage the aircraft's thermal signature more effectively, allowing better compliance with signature requirements. Thirdly, when ram air is used for cooling, the performance of the heat exchanger(s) will depend on the speed of airflow over the heat exchanger(s), which in turn depends on the velocity of the aircraft. Accordingly, the performance of the system may vary depending on the engine throttle position, when ram air is used as a cooling medium. Providing a coolant distribution system 225 configured to receive a supply of liquid coolant, as in Fig. 2, can therefore provide more stable system performance.

In the embodiment of Fig. 2, the airflow recirculation path is configured to direct the cooled air to two thermal consumers 240, 241. In the present embodiment, the first thermal consumer 240 on the airflow recirculation path is a cockpit of the aircraft, whilst the second thermal consumer 241 is an avionics compartment housing one or more avionics components. In other words, in the present embodiment the airflow recirculation path is configured such that the cockpit 240 is located upstream of the avionics compartment 241 on the airflow recirculation path, meaning that the cooled air passes through the cockpit 240 before passing through the avionics compartment 241. In some embodiments the order of the thermal consumers may be reversed, such that the airflow recirculation path is configured so that the cockpit 240 is disposed downstream of the avionics compartment 241 (in other words, the cooled air passes through the avionics compartment 241 before passing through the cockpit 240). The order in which a plurality of thermal consumers 240, 241 are arranged along the airflow recirculation path in any given embodiment may be chosen according to the temperature requirements of the thermal consumers 240, 241. Also, as described above in relation to Fig. 1, in some embodiments a plurality of thermal consumers 240, 241 may be arranged in parallel instead of in series (or in a combination of both series and parallel, for three or more thermal consumers). Furthermore, in some embodiments the one or more thermal consumers may include a passenger compartment, instead of or in addition to the cockpit 240 and/or the avionics compartment 241. In such embodiments, the airflow recirculation path may be configured such that the passenger compartment is also located upstream of the avionics compartment 241 on the airflow recirculation path. The passenger compartment and cockpit 241 may both be considered as examples of spaces that are configured for human occupancy.

The system 200 of the present embodiment further comprises a pressure control valve 245 for controlling a pressure within the cockpit 240 (and/or a pressure within a passenger compartment, in embodiments in which the cooled air is directed through a passenger compartment). The pressure control valve 245 is controllable to allow a flow 246 of air to exit the cockpit 240 without continuing along the airflow recirculation path. For example, the pressure control valve 245 may be used to remove air from the closed loop such that the cockpit 240 adheres to its pressure schedule, which may be particularly necessary during climb manoeuvres when the cockpit 'de-pressurises'.

Finally, in the present embodiment the system 200 also comprises third and fourth bypass valves 242, 243 and a second bypass line 244. One end of the second bypass line 244 is in fluid communication with a point along the airflow recirculation path upstream of the cockpit 240, whilst another end of the second bypass line 244 is in fluid communication with a point along the airflow recirculation path downstream of the cockpit 240. In this way, one or both of the third and fourth bypass valves 242, 243 can be controlled to allow some, all or none of the flow of compressed air to flow along the second bypass line 244 and thereby bypass the cockpit 240. In this way, the extent to which the cockpit 240 is cooled by the flow of cooled air can be dynamically adjusted by controlling the third and/or fourth bypass valves 242, 243. In some embodiments, one of the third and fourth bypass valves 242, 243 may be omitted, or both bypass valves 242, 243 and the second bypass line 244 may be omitted entirely (e.g. if dynamic control of the extent of cooling is not required). In embodiments in which one of the third and fourth bypass valves 242, 243 is omitted, the remaining bypass valve 242, 243 (i.e. a single valve) may be disposed at any point along the second bypass line 244 (e.g. midway along the second bypass line 244), rather than being disposed at one end of the second bypass line 244.

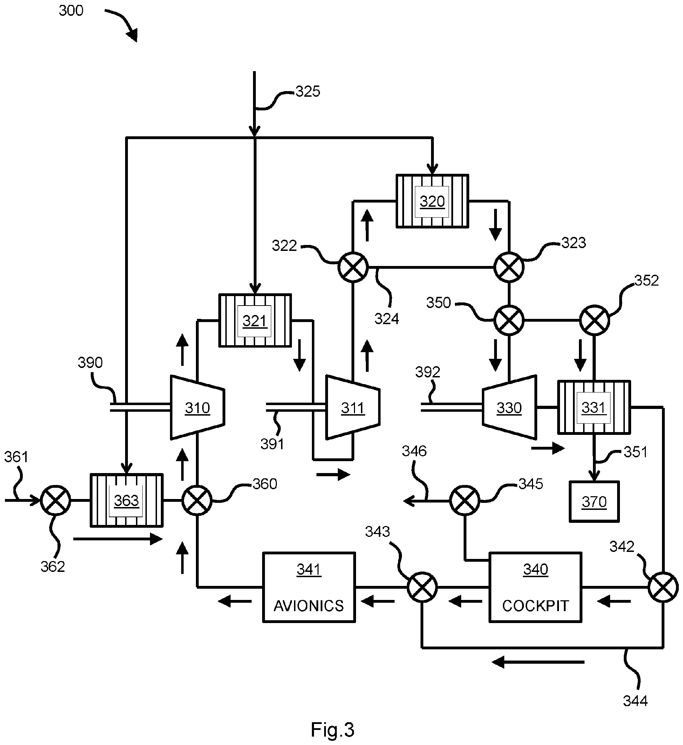

Referring now to Fig. 3, a system comprising an air cycle system having a plurality of compressors and a turbine capable of being driven independently of one another is schematically illustrated, according to an embodiment of the present invention. Like the system 200 of Fig. 2, the system illustrated in Fig. 3 comprises an ACS comprising: an air compression stage comprising first and second compressors 310, 311, a heat exchange stage comprising an intercooler 321 and an aftercooler 320, including first and second bypass valves 322, 323 and a first bypass line 324, and an air expansion stage comprising a turbine 330; an airflow recirculation path; a plurality of thermal consumers in the form of a cockpit 340 and avionics compartment 341; third and fourth bypass valves 342, 343 and a second bypass line 344; a pressure control valve 345 controllable to allow a flow 346 of air to exit the cockpit 340 without continuing along the airflow recirculation path; an air outlet 350 configured to provide a supply of compressed air 351 to one or more pressurised air consumers 370; a first pressure reduction valve 352; an outlet heat exchanger 331; an air inlet 360 configured to receive a stream of inlet air 361; a second pressure reduction valve 362; an inlet heat exchanger 363; and a coolant distribution system 325 configured to receive a supply of liquid coolant. For the sake of brevity, similar aspects that are common to both systems 100, 200 will not be repeated here.

The system 300 of Fig. 3 differs from the system 200 of Fig. 2 in that the first and second compressors 310, 311 and turbine 330 are each provided with a separate drive shaft 390, 391, 392. Depending on the embodiment, some or all of the separate drive shafts 390, 391, 392 could ultimately be driven by the same source of power, for instance an electric motor such as the one shown in Fig. 2. In such embodiments, each drive shaft may be coupled to the power source via a suitable coupling, including but not limited to a belt drive, gearbox, or chain drive. In other embodiments, one or more of the separate drive shafts 390, 391, 392 may be driven from a different power source. For example, in some embodiments some of the separate drive shafts 390, 391, 392 may be electrically driven, whilst others may be pneumatically drive. It will be appreciated that intermediate arrangements between Figs. 2 and 3 are also possible, i.e. embodiments in which one or more rotating components of the ACS are provided with their own dedicated drive shaft whilst the remaining rotating components share a common drive shaft.

Providing separate drive shafts 390, 391, 392 for some or all of the rotating components 310, 311, 330 within the ACS may offer certain advantages, for example by allowing each component to rotate at a different speed (e.g. to optimise the performance of each component), and/or by allowing the components to be packaged in a different physical layout than would be possible when using a single common drive shaft.

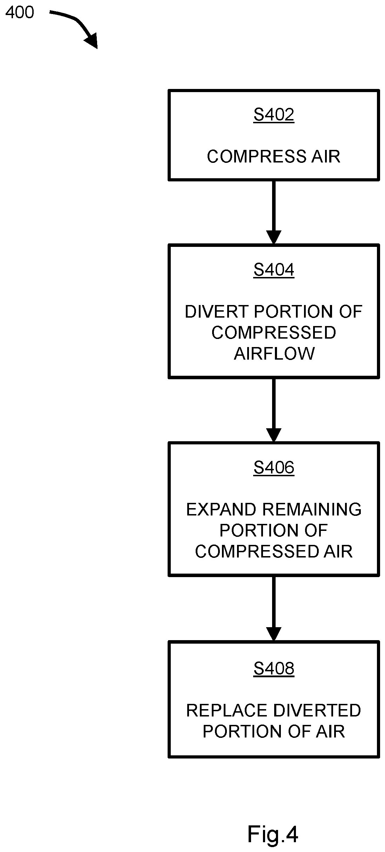

Referring now to Fig. 4, a flowchart is illustrated showing a method of supplying a flow of compressed air, according to an embodiment of the present invention. The method corresponds to the steps that are performed during operation of systems such as those described above with reference to Figs. 1 to 3. Whilst a linear flowchart is shown in Fig. 4 to aid in understanding of the method 400, it will be appreciated that in reality the steps may be performed simultaneously at different points around the closed loop, and some or all of the steps may be performed continuously during operation of the system. The method shown in Fig. 4 may, for example, be implemented by a controller configured to control various components within the system 100, 200, 300, such as components of the ACS, the air outlet 150, 250, 350 and the air inlet 160, 260, 360.

First, in step S402 the air compression stage 110, 210, 211, 310, 311 of the ACS is controlled to receive and compress the flow of air so as to produce the flow of compressed air. Then, in step S404 the air outlet 150, 250, 350 is controlled to divert at least a portion of the compressed air away from the airflow recirculation path, thereby providing a supply of compressed air. Next, in step S406 the air expansion stage 130, 230, 330 of the ACS is controlled to expand air received from the heat exchange stage, so as to output the flow of cooled air to one or more thermal consumers 140, 240, 241, 340, 341 via the airflow recirculation path. Then, in step S408 the air inlet 160, 260, 360 is controlled to introduce air into the airflow recirculation path, for instance to compensate for a reduction in pressure and/or flow rate along the airflow recirculation path that is caused, or that would otherwise be caused, by said portion of the compressed air being diverted away from the airflow recirculation path.

In some embodiments, in steps S404 and/or S408 the air outlet 150, 250, 350 and/or the air inlet 160, 260, 360 may be controlled to allow air into or out of the closed loop in dependence on a received signal indicative of a cooling requirement and/or a pressurised air requirement. For example, the signal may be received as the result of user input (e.g. inputted a pilot, crew member or other passenger via any suitable user interface), or may be generated automatically without user input.

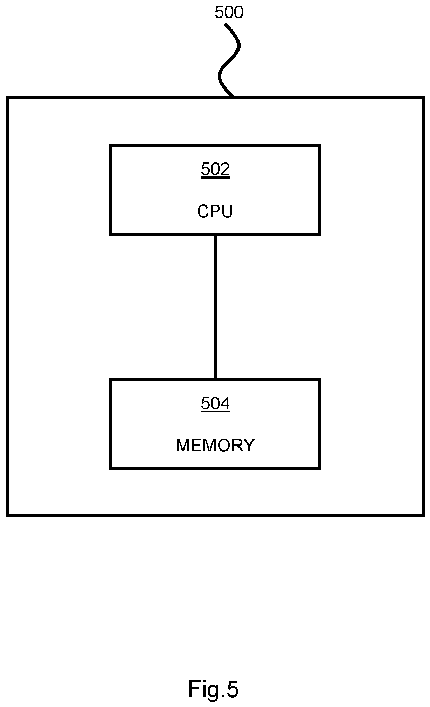

Referring now to Fig. 5, a controller for controlling a system for supplying a flow of compressed air is illustrated, according to an embodiment of the present invention. The controller 500 may, for example, perform some or all of the steps of the method 400 described above with reference to Fig. 4 when controlling the system 100, 200, 300.

The controller 500 comprises one or more processors 502. The one or more processors 502 control operation of other components of the system 100, 200, 300. The one or more processors 502 may, for example, comprise a general-purpose processor. The one or more processors 502 may be a single core device or a multiple core device. The one or more processors 502 may comprise a Central Processing Unit (CPU) or a graphical processing unit (GPU). Alternatively, the one or more processors 502 may comprise specialised processing hardware, for instance a Reduced Instruction Set Computer (RISC) processor or programmable hardware with embedded firmware. Multiple processors may be included.

The controller 500 comprises a memory 504. The memory 504 may comprise a working or volatile memory. The one or more processors may access the volatile memory in order to process data and may control the storage of data in memory. The volatile memory may comprise Random Access Memory (RAM) of any type, for example GPU RAM, Static RAM (SRAM), Dynamic RAM (DRAM), or it may comprise Flash memory, such as an SD-Card.

The memory 504 may comprise a non-volatile memory, which may also be referred to as non-transitory memory. The non-volatile memory stores a set of operating instructions for controlling the operation of the one or more processors 502 in the form of computer-readable instructions. The non-volatile memory may be a memory of any kind such as a Read Only Memory (ROM), a Flash memory or a magnetic drive memory.

The one or more processors 502 are configured to execute operating instructions to cause the controller 500 to perform any of the methods described herein, for example a method such as the one described above with reference to Fig. 4. The operating instructions may comprise code (i.e. drivers) relating to the hardware components of the controller 500 and/or hardware components of the system 100, 200, 300, as well as code relating to the basic operation of the controller 500. Generally speaking, the one or more processors 502 execute one or more instructions of the operating instructions, which are stored permanently or semi-permanently in the non-volatile memory, using the volatile memory to temporarily store data generated during execution of said operating instructions.

Embodiments of the present invention have been described in relation to systems for simultaneously providing cooled air and pressurised air in a vehicle such as an aircraft (e.g. a military aircraft). However, in other embodiments similar systems may be implemented in other types of vehicle, or in non-vehicle-based applications (e.g. in structures such as buildings) to similarly provide cooled air and pressurised air. Examples of possible applications of systems such as those described herein include, but are not limited to:
- aircraft (e.g. military or civilian) - cooling of cabin; supply of pressurised air for uses such as anti-icing, potable water tank pressurisation, and control of aerodynamics (e.g. prevention of flow separation from a control surface);
- road car - cooling of cabin; supply of pressurised air for uses such as brake cooling, control of aerodynamics (e.g. prevention of flow separation from a surface), engine boost (e.g. turbo lag prevention), or supplementation of engine water cooling when ram air is not sufficient;
- submarine - cooling of pressure vessel; supply of pressurised air for uses such as heating in a distillation process for creating oxygen through electrolysis of seawater, pressurising hover tanks, heating hot water tanks, charging/releasing munitions, or propulsion cooling;
- surface ships - refrigerating food stores; supply of pressurised air for uses such as heating (hot water tanks);
- domestic/industrial buildings, e.g. houses, warehouses, office blocks etc. - cooling of spaces/rooms; supply of pressurised air for uses such as pumping water up a column, or heating/pressurization of a central heating system.

Whilst certain embodiments of the invention have been described herein with reference to the drawings, it will be understood that many variations and modifications will be possible without departing from the scope of the invention as defined in the accompanying claims.

## Claims

1. A system (100; 200; 300) comprising:
an air cycle system, ACS, comprising an air compression stage (110; 210, 211; 310, 311) arranged to receive and compress a flow of air so as to produce a flow of compressed air, a heat exchange stage (120; 220, 221; 320, 321) arranged to cool said compressed air, and an air expansion stage (130; 230; 330) arranged to expand air received from the heat exchange stage so as to output a flow of cooled air;
an airflow recirculation path configured to direct the cooled air from the ACS to one or more locations (140; 240, 241; 340, 341) requiring cooling, and from said one or more locations to an inlet of the air compression stage;
an air outlet (150; 250; 350) controllable to divert at least a portion of said compressed air away from the airflow recirculation path, thereby providing a supply of compressed air (151; 251; 351); and
an air inlet (160; 260; 360) controllable to introduce air into the airflow recirculation path.

2. The system according to claim 1, comprising:
an outlet heat exchanger (231; 331) configured to cool said portion of compressed air diverted by the air outlet, the outlet heat exchanger being configured to exchange heat between said portion of compressed air and the flow of cooled air; and/or
an inlet heat exchanger (263; 363) in fluid communication with the air inlet, the inlet heat exchanger being configured to reduce a temperature of the air introduced into the airflow recirculation path by the air inlet.

3. The system according to claim 1 or 2, comprising:
a first pressure reduction valve (252; 352) for controlling a pressure of the supply of compressed air, the first pressure reduction valve being arranged to receive said portion of compressed air diverted by the air outlet; and/or
a second pressure reduction valve (262; 362) for controlling a pressure at which said air is introduced into the airflow recirculation stream by the air inlet.

4. The system according to any one of the preceding claims, wherein the ACS comprises a plurality of rotating components (110, 130; 210, 211, 230; 310, 311, 330), the system comprising:
a drive mechanism (180, 190; 280; 290; 390, 391, 392) configured to drive said one or more rotating components, the drive mechanism comprising a common drive shaft (190; 290) connected to two or more of said plurality of rotating components, such that said two or more rotating components are configured to be driven via rotation of the common drive shaft.

5. The system according to claim 4, wherein the drive mechanism comprises an electric motor.

6. The system according to any one of the preceding claims, wherein the air compression stage of the ACS comprises:
a plurality of compressors connected in series, such that an outlet of one (210; 310) of the plurality of compressors is connected to an inlet of another one (211; 311) of the plurality of compressors,
wherein the heat exchange stage of the ACS comprises:
an intercooler heat exchanger (221; 321) connected between the outlet of said one of the plurality of compressors and the inlet of said other one of the plurality of compressors; and/or
an aftercooler heat exchanger (120; 220; 320) connected between an outlet of the air compression stage and an inlet of the air expansion stage.

7. The system according to any one of the preceding claims, comprising:
a liquid coolant distribution system (225; 325) configured to receive a supply of liquid coolant and distribute said liquid coolant to one or more heat exchangers within the system as a cooling medium.

8. The system according to any one of the preceding claims, comprising:
a pressure control mechanism for controlling a pressure of said portion of compressed air that is diverted away from the airflow recirculation path by the air outlet.

9. The system according to claim 8, wherein the air expansion stage of the ACS comprises a variable geometry turbine, and the pressure control mechanism comprises a mechanism for adjusting an orientation of one or more guide vanes within the variable geometry turbine.

10. A vehicle, such as an aircraft, comprising the system according to any one of the preceding claims.

11. The vehicle according to claim 10, wherein the air inlet is configured to receive air from one or more of the following sources for introduction into the airflow recirculation pathway:
bleed air from one or more engines of said vehicle;
one or more compressors; and
one or more ejectors configured to be driven by the supply of compressed air from the air outlet.

12. A method of supplying a flow of compressed air from an air cycle system, ACS, comprising an air compression stage (110; 210, 211; 310, 311) arranged to produce a flow of compressed air, a heat exchange stage (120; 220, 221; 320, 321) arranged to cool said compressed air, and an air expansion stage (130; 230; 330) arranged to expand air received from the heat exchange stage, the method comprising:
controlling the air compression stage (110; 210, 211; 310, 311) of the ACS to receive and compress (S402) the flow of air so as to produce the flow of compressed air;
controlling (S404) an air outlet to divert at least a portion of said compressed air away from an airflow recirculation path, thereby providing a supply of compressed air, wherein said airflow recirculation path is configured to direct the cooled air from the ACS to one or more locations (140; 240, 241; 340, 341) requiring cooling and from said one or more locations to an inlet of the air compression stage;
controlling the air expansion stage (130; 230; 330) of the ACS to expand (S406) air received from the heat exchange stage so as to output the flow of cooled air to said one or more locations via the airflow recirculation path; and
controlling (S408) an air inlet (160; 260; 360) to introduce air into the airflow recirculation path.

13. A computer program comprising instructions which, when executed by one or more processors (502), cause said one or more processors to carry out a method according to claim 12.

14. A non-transitory computer-readable storage medium (504) having stored thereon a computer program according to claim 13.

15. A controller (500) configured to control the system according to any one of claims 1 to 9, the controller comprising:
the non-transitory computer-readable storage medium (504) according to claim 14; and
one or more processors (502) arranged to execute the computer program stored on said non-transitory computer-readable storage medium.
